(19) Europäisches Patentamt
European Patent Office
Office européen des brevets

(11) **EP 2 214 324 B1**

(12) **EUROPEAN PATENT SPECIFICATION**

(45) Date of publication and mention
of the grant of the patent:
**30.03.2011 Bulletin 2011/13**

(51) Int Cl.:
***H04B 5/00*** *(2006.01)* ***G01S 11/06*** *(2006.01)*

(21) Application number: **09290060.4**

(22) Date of filing: **28.01.2009**

(54) **Method and system for localization using radiating cables**

Verfahren und System zur Ortung unter Verwendung von Strahlungskabeln

Procédé et système de localisation utilisant des câbles de rayonnement

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**04.08.2010 Bulletin 2010/31**

(73) Proprietor: **Alcatel Lucent
75008 Paris (FR)**

(72) Inventors:
• **Hettstedt, Heinz-Dieter
30916 Isernhagen (DE)**
• **Kohnen, Wolfgang
30179 Hannover (DE)**
• **Harutyunyan, Gurgen
30165 Hannover (DE)**

(74) Representative: **Schmidt, Werner Karl et al
Alcatel Lucent
Intellectual Property & Standards
70430 Stuttgart (DE)**

(56) References cited:
WO-A-2009/018815    US-A- 4 041 495
US-A- 5 329 576    US-A1- 2008 042 864

**Description**

**Technical field**

The present invention relates to a method of Localization using Radiating Cables and a system for localizing mobile devices

**Background and related Art**

A cellular network is a radio network made up of a number of radio cells (or just cells) each served by a fixed transmitter, known as a cell site or base station. These cells are used to cover different areas in order to provide radio coverage over a wider area than the area of one cell. Each cell comprises an antenna which covers the area of the cell.
In a cellular network it is possible to determine the number of mobile devices, such as wireless cellular telephones, that are coupled to one antenna from the power level at that antenna. Circular networks have major drawbacks in tunnels and large buildings because the signal reception is very limited.
Also part of the art are radiating or leaky cables. They are used for establishing a radio connection between base stations and mobile devices located in buildings or tunnels. In general, radiating cables are a form of coaxial cable. A radiating cable is constructed in a similar fashion to hard line, however it is constructed with tuned slots cut into the shield. These slots are tuned to the specific RF wavelength of operation or tuned to a specific radio frequency band. This type of cable is to provide a tuned bi-directional "desired" leakage effect between transmitter and receiver. It is often used in elevator shafts, underground, transportation tunnels and in other areas where an antenna is not feasible.
The use of leaking coaxial cables allows for greater connectivity of mobile devices in tunnels or long corridors. However, it is not possible to locate a mobile device within tunnels, buildings or corridors.
In case of an emergency such as a fire breaking out in a tunnel it would be a great advantage for emergency services to have some localization of people in the tunnel. Contacting all the network providers in case of an emergency is very impractical. Furthermore, the information from the network provider could only be used to determined how many users are connected to a radiating cable. The localization of the mobile device users along the cable would still be impossible.
US 2008/ 042 864 A1 discloses mobile device localization using a radiating cable. WO 2009/018815 forms prior and under Article 54(3) EPC and discloses localization using radiating cables with attenuators placed in the cable.
It is problem of the present invention, to provide a simple and affordable method and system for localizing mobile devices, which enables localization of said devices within buildings or tunnels.
The present invention is directed to a method for localizing mobile devices. The method comprises the step of measuring power levels on opposing ends of a radiating cable. The radiating cable has an attenuator located between said opposing ends. The radiating cable is adapted to be used for communicating with the mobile device. The method further comprises the step of comparing the power levels on the opposing ends of the radiating cable. Additionally, the method comprises the step of determining whether mobile devices are communicating using the radiating cable on the basis of the measured power levels.
In accordance with an embodiment of the invention a mobile cellular communication standard, such as UMTS, is used for the communication with the mobile devices that specifies that the transmission power of each mobile device is controlled such that the power received at the base station, i.e. at the end of the coaxial cable that is connected to the base station, is identical for all mobile devices.
The above described method of measuring of the power levels enables the determination of active users along the cable. This can be done without the need of any information from the network providers. Since there is usually a number of different network providers, contacting all of them would require too much time. Therefore, the use of this method allows a timely determination of active mobile devices along a cable in case of an emergency.
The method further comprises a communication level which is adapted to control the power level received from a mobile device at one of the opposing ends of the radiating cable such that a predetermined power level Po is received from each mobile devices. Furthermore, with this method the number of mobile devices can be determined on the basis of the total power level received from the mobile device on the cable end.
The measurement of the power levels enables the determination of the number of users on the cable. With this method, the total number of mobile users connected to a cable can be determined without any information from the mobile network providers. This allows for a relatively fast determination of the number of users in case of emergency.
In a preferred embodiment of the invention, the method further comprises determining, where the mobile devices are located relative to the attenuator on the radiating cable on the basis of the difference between the power levels on the opposing ends.
By comparing the power levels from one end of the cable to the power levels on the opposing end of the cable, the method enables the localization of the previously determined number of users along the cable. It is now possible to localize the users in the segments of the cable that are separated by the attenuator. In the case of a fire in a tunnel or a high building this would give emergency services an indication where the highest number of users are located without any information from the network providers.

The present invention further relates to a system for localizing mobile devices. The system comprises at least one radiating cable for transmitting and receiving radiation from radio communication, said radiating cable comprising at least one attenuating element arranged between first and second opposing ends of the radiating cable, wherein the attenuating element attenuates a signal on the radiating cable by a predetermined amount.

The attenuating element attenuates signals traveling from one end to the opposing end of the cable. A mobile device communicating using the cable in general couples to the cable on one side of the attenuating element. Therefore, the power levels received from said mobile device differs at the opposing ends of the cable. The difference in power levels on the radiating cable due to the attenuating device is indicative of the location of the mobile device in relation to the radiating cable. Therefore, the system enables a localization of mobile devices.

According to a preferred embodiment of the present invention, the system for localizing mobile devices comprises a first detection unit connected to the first end of the radiating cable. The first detection unit is adapted to determine a power level on the first end of radiating cable. A second detection unit is connected to the second end of the radiating cable. The second detection unit is preferably adapted to determine a power level on the second end of the radiating cable. The first and second detection units may measure the power levels at the opposing cable ends. These power levels are indicative of the location of the mobile device relative to the radiating cable. Therefore, the first and second detection units represent a preferred embodiment for enabling a localization of the mobile device.

The present invention further relates to a location determining device for determining a location of mobile devices. The location determining device comprises means for receiving power levels detected by a first and a second detection unit of at least one radiating cable. The location determining device further comprises processing means for comparing the detected power levels and for determining whether mobile devices are present on the basis of the detected power levels. The separation between the detecting system and the location determining device allows for them to be physically separated. The detection units are preferably located at the cable. Therefore, their placement is somewhat predetermined. A separate location determining device enables a free placement of the processing means in a building or tunnel. It is therefore possible to place the processing means at the entrance of the building. This enables the emergency services to reach and use the device for localization in a timely manner.

According to a preferred embodiment, the location determining device for determining a location of mobile devices is portable or stationary and the means for receiving the detected power levels uses a wired or wireless connecting means to the system for localizing mobile devices. This preferred embodiment allows for the location determining device for determining to be portable. For example, the device may be part of the equipment of emergency services seeking to locate people in buildings or tunnels. The location determining device would only require a wired or mobile connection with the detection units to perform the processing logic and determine the distribution of mobile devices along the cable. For example, the location determining device for determining may comprise an interface for mobile or wired connection with the detection units.

**Brief description of Figures**

Preferred embodiments of the present invention are describes with reference to the following figures.

Figure 1 is an embodiment of the invention for localization along the cable with one radiating cable sectioned by an attenuator with one mobile transmitting in each section.

Figure 2 depicts the power levels in a radiating cable of the embodiment in figure 1 with one mobile transmitting in section A of the cable.

Figure 3 depicts the power levels in a radiating cable of the embodiment in figure 1 with one mobile transmitting in section B of the cable.

Figure 4 depicts the power levels in a radiating cable of the embodiment in figure 1 with one mobile transmitting in section A and one mobile transmitting in section B of the cable.

Figure 5 is further embodiment of the invention with two cables, each sectioned by an attenuator, for localization in an area.

Figure 6 is a table showing the principle power readings of each detection unit with one mobile in either of the sections.

**Description of Figures**

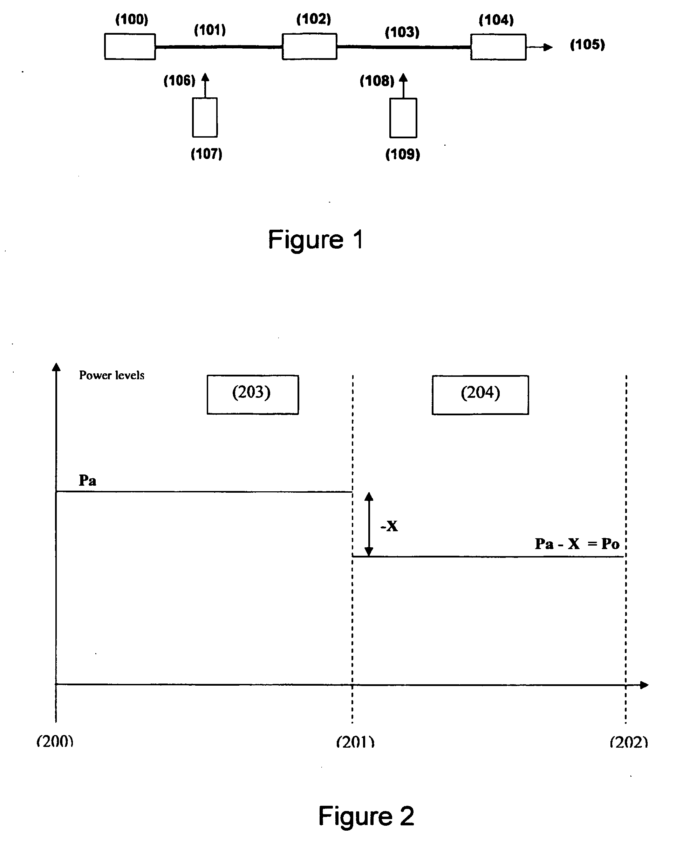

Figure 1 illustrates an embodiment of the invention for localization along a cable. One cable , is sectioned by an attenuator 102 into a first section 101 and a second section 103. The cable is a radiating cable. A first cable section 101 is connected between a first detection unit 100 and an attenuator 102. A second cable section 103 is connected between an attenuator 102 and a second detection unit 104. The second detection unit 104 is further connected to the base station 105. The first cable section 101 receives a signal 106 from a first mobile device107 and the second cable section 103 receives a signal 108 from a second mobile device 109. Both signals 106 and 108 are transmitted to the base station 105.

The attenuator 102 influences the the power level of each signal send through it. In this embodiment the power level of each signal passing through the attenuator 102 is lowered by X.

The attenuation of the signal may be measured in dBm. Additionally, for illustrative purposes, the coupling loss of the signal power between the mobile devices and the cable and the fading margins along the cable are assumed to be zero. In all of the following figures, the coupling loss and the fading margin are neglected.

The tuning of the signal power level in the mobile devices is similar to that in any circular network, i.e. the power of the outgoing signal of each mobile device is adjusted in such a way as to always have the same power level arriving at the base station 105. The process is also known as power control. The power level arriving at the base station 105 is denoted as $P_0$. The power loss of each signal during the transmission between the mobile devices 107,109, and the base station 105 is compensated by increasing the power of the signal emitted from the mobile devices 107,109.

It follows that the power level of the signal 106 emitted from the first mobile device 107 , which is denoted as $P_a$, is:

$$P_a = P_0+X,$$

where $P_0$ is the received signal strength at the base station and $P_a$ is the power of the signal 106 emitted from a first mobile device107.

Similarly, the the power level of the signal 108 emitted from the second mobile device 109, which is donated as $P_b$, is:

$$P_b = P_0.$$

In figure 1 two detection units are attached to the cable. Their function is to measure the power level of the signal in the cable they are attached to. The power levels of the different signals passing through each cable are additive. Therefore it follows, that in figure 1 the second detection unit 104 would measure:

$$P_{PCU\,2} = (P_a - X) + (P_b)$$

since $P_a = P_0 +X$ and $P_b = P_0$, this yields,

$$P_{PCU\,2} = 2{*}P_0$$

The first detection unit 100 on the other hand would measure:

$$P_{PCU1} = (P_a) + (P_b -X)$$

since $P_a = P_0+X$ and $P_b = P_0$, this yields,

$$P_{PCU\,1} = (P_0 + X) + (P_0 - X)$$

Figure 2 illustrates the power levels along the cable of the embodiment in figure 1. Illustrated are the power levels along the first cable section 101,203, and the second cable section 103,204, with a first mobile device 107 transmitting in the vicinity of a first section 101,203. The x-axis indicates the distance along the cable, starting with the first detection unit 100,200, the attenuator, 102,201, and the second detection unit, 104,202. The y-axis indicates the power level. The power level of the signal 106 emitted from the first mobile device 107 is $P_a$. The same power level is measured at the first detection unit, 100,200,. Therefore:

$$P_{PCU\,1} = P_a = (P_0 + X)$$

To reach the second detection unit , 104,202, the signal 106 from the first mobile device 107 must pass through the attenuator, 102,201. Since a powers loss of X occurs in the attenuator 202, the power level of the signal 106 in second section 103,204, and in the second detection unit, 104,202, is:

$$P_{PCU\,2} = P_a - X = (P_0 + X) - X = P_0$$

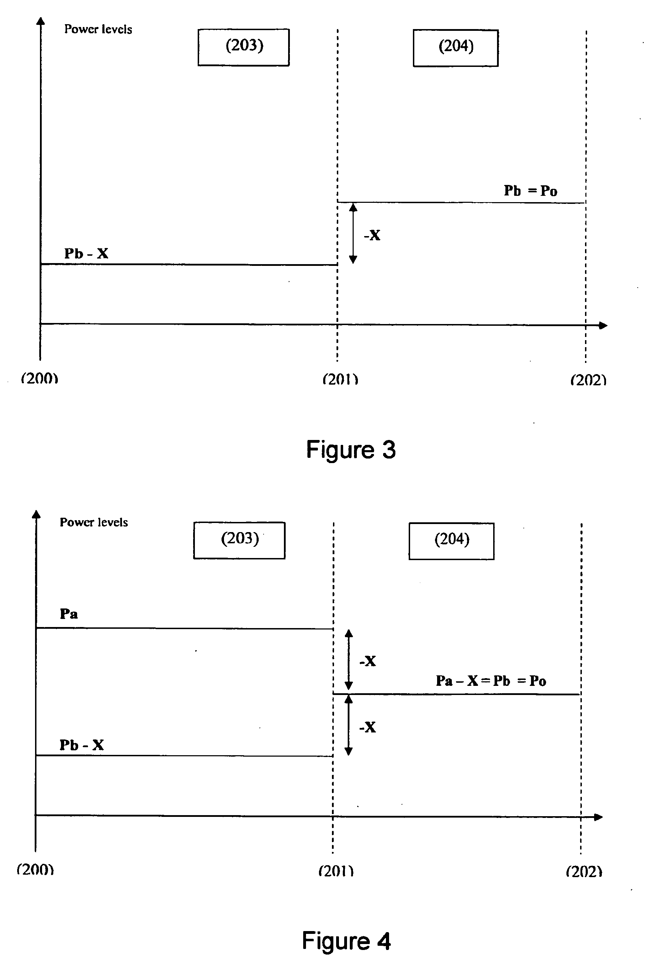

Figure 3 illustrates the power levels along the cable of the embodiment in figure 1. Illustrated are the power levels along the first cable section 101,203, and the second cable section 103,204, with the second mobile device 109 transmitting in the vicinity of second cable section 103,204. The power level of the signal 108 emitted from the second mobile device109 is $P_b$. The same power level is measured at the second detection unit, 104,202. Therefore:

$$P_{PCU\,2} = P_b = (P_0)$$

To reach the first detection unit 100,200, the signal 108 from the second mobile device109 must pass through the attenuator, 102,201,. Since a powers loss of X occurs in the attenuator, 102,201, the power level of the signal 108 in first cable section 101,203, and in the first detection unit, 100, 200, is:

$$P_{PCU\,1} = P_b - X = (P_0) - X$$

Figure 4 illustrates the power levels along the cable of the embodiment in figure 1. Illustrated are the power levels along the first cable sections 101,203, and the second cable section 103,204, with the second mobile device 109 transmitting in the vicinity of second section 103,204, and the first mobile device 107 transmitting in the vicinity of first section 101,203. The power level of the signal 108 emitted from the second mobile device 109 is $P_b$ and the power level of the signal 106 emitted from the first mobile device 107 is $P_a$. Therefore the power level measured at the first detection unit, 100,200, is

$$P_{PCU1} = (P_a) + (P_b - X),$$

$$P_{PCU1} = (P_0 + X) + (P_0 - X)$$

and the power level measured at the second detection unit 104,202 is

$$P_{PCU\,2} = (P_a - X) + (P_b)$$

$$P_{PCU\,2} = 2*P_0$$

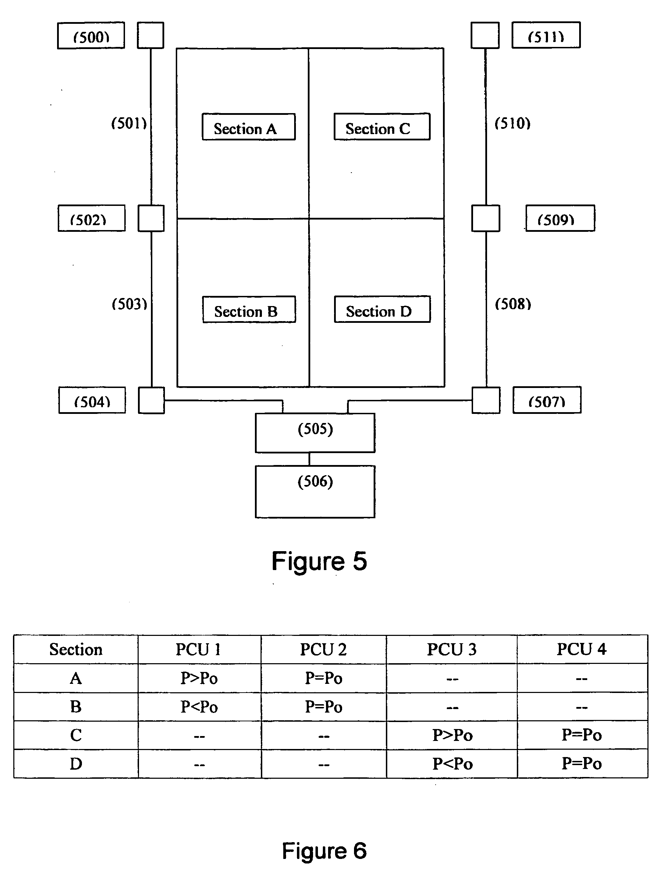

Figure 5 illustrates an embodiment of the invention for localization of mobile devices in a specified area. Two cables, cable 1, 500-504, and cable 2, 507-511, are used to localize mobile devices in a specified area. In this example, the specified area is sectioned off into sections A, B, C and D. Cable 1, 500 -504, consists of a first detection unit 500, a first cable section 501, an attenuator 502, a second cable section 503 and a second detection unit 504. Cable 2, 507-511, consists of a third detection unit 511, a third cable section 510, an attenuator 509, a fourth cable section 508 and a fourth detection unit 507. The two cables are connected to a base station 506 via a power splitter 505.

Figure 6 is a table illustrating the localization of one mobile device in one of the sections of figure 5. It is a table illustrates the measured power levels at each detection unit with a mobile device transmitting in one of the sections A to D. The columns of the table indicate the power levels at the different detection units while the rows indicate in which area section the mobile device is transmitting from. For example, the first row indicates a mobile device transmitting in area A. The first detection unit would measure a power level $P > P_0$; the second detection unit would measure $P = P_0$, and the third and fourth detection unit would measure no signal.

The localization of a plurality of mobile devices in the embodiment of figure 5 is as follows and can be implemented by a location determining device. Due to measurements of the individual power levels of the detection units, the differences to their minimum levels for 1 or zero users and the differences between levels of the first and second detection unit and the third and fourth detection unit, the number of users in section A+B, C+D and their distribution can be determined:

    o The second detection unit detects information indicative of the total number of users in sections A+B; the fourth detection unit detects information indicative the total number of users in sections C+D.
    o The first detection unit detects information indicative of the distribution of users between sections A and B; the third detection unit detects information indicative of the distribution of users between sections C and D
    o No users are detected in any of the sections A, B, C or D, if the detection units detect no signal.

These results provide a localization system independent of operators as long as users do activate their mobile devices.

The localization method with a plurality of mobile devices in the embodiment of figure 5 is further illustrated with the use of the following equations. In figure 5, the power level measurements from the second detection unit and the fourth detection unit determine the number of active mobile devices along each cable. Therefore:

$$P_{PCU2} = N_1 * P_0$$

$$P_{PCU4} = N_2 * P_0$$

where $P_{PCU2}$ is the total power measured at the second detection unit, 504, $P_{PCU4}$ is the total power measured at the fourth detection unit, 507, $N_1$ is the number of mobile devices transmitting along cable 1, 500-504, and $N_2$ is the number of mobile devices transmitting along cable 2, 507-511.

It follows that the total number of users in the total area is:

$$N_{total} = N_1 + N_2$$

The measurements from the first detection unit 501, and third detection unit 511, are used to determine how mobile devices are distributed between the cable sections. The following equations are used for cable 1, 500-504:

$$N_1 = N_{1a} + N_{1b}$$

where $N_{1a}$ is the number of mobile devices transmitting from section A and $N_{1b}$ is the number of mobile devices transmitting from section B. And:

$$P_{PCU1} = N_{1a} * (P_a) + N_{1b} * (P_b - X)$$

where $P_{PCU1}$ is the power level measured at the first detection unit 501. Now, due to the power control $P_b = P_0$ and $P_a = P_0+X$. This yields:

$$P_{PCU1} = N_{1a} * (P_0+X) + N_{1b} * (P_0 - X).$$

With the difference between the power level measured at first detection unit, $P_{PCU1}$, and that of the second detection unit, $P_{PCU2}$; it is possible to determine how the mobile devices are distributed between the sections.

Similarly, for cable 2, 507-511:

$$N_2 = N_{2c} + N_{2d}$$

where $N_{2c}$ is the number of mobile devices transmitting from section C and $N_{2d}$ is the number of mobile devices transmitting from section D. And:

$$P_{PCU3} = N_{2c} * (P_c) + N_{2d} * (P_d - X)$$

where $P_{PCU3}$ is the power level measured at the third detection unit 511. Now substituting $P_c = P_0$ and $P_d = P_0+X$ yields:

$$P_{PCU3} = N_{2c} * (P_0+X) + N_{2d} * (P_0 - X).$$

Similarly, with the difference between the power level measured at thrid detection unit, $P_{PCU3}$, and that of the fourth detection unit, $P_{PCU4}$; it is possible to determine how the mobile devices are distributed between the sections.

In the embodiment of the invention where the attenuation X is in dBm, the values for $(P_0-X)$ would render very small compared to those of $(P_0+X)$, therefore it is possible to approximate the above equations to

$$P_{PCU3} = N_{2c} * (P_0+X)$$

and

$$P_{PCU1} = N_{1a} * (P_0+X).$$

With the help of these equations, the distribution of the mobile devices between the first cable section 503 and the second cable section 501 of cable 1, 500-504, and third cables section 510 and fourthcable section 508 of cable 2, 507-511, can be determined.

Reference Signs:

(100) - first detection unit
(101) - first cable section
(102) - attenuator
(103) - second cable section
(104) - second detection unit
(105) - signal to base station
(106) - signal emitted from the first mobile device
(107) - first mobile device (108) -signal emitted from the second mobile device
(109) - second mobile device

(200) - first detection unit
(201) - attenuator
(202) - second detection unit
(203) - first cable section
(204) - second cable section

(500) - first detection unit
(501) - first cable section
(502) - attenuator
(503) - second cable section
(504) - second detection unit
(505) - power splitter
(506) - base station
(507) - fourth detection unit
(508) - third cable section
(509) - attenuator
(510) - fourth cable section
(511) - third detection unit

**Claims**

1. Method for localizing mobile devices, comprising the steps of:

   measuring power levels on opposing ends of at least one radiating cable (101,103), wherein said radiating cable (101,103) is adapted to be used for communicating with the mobile device,
   comparing the power levels on the opposing ends of the radiating cable (101,103),
   determining whether mobile devices are present on the basis of the measured power levels,
   **characterized by** said radiating cable (101,103) having at least one attenuator (102) located between said opposing ends
   controlling the power level received from a mobile device on one of said opposing ends of the radiating cable (101,103) such that a predetermined power level Po is
   received from each mobile device; and
   determining the number of mobile devices on the basis of the total power level received from each mobile device on said one opposing end.

2. Method for localizing mobile devices according to claim 1,-comprising the step of determining where the of mobile devices are located relative to the attenuator (102) on the radiating cable (101,103) on the basis of the difference between the power levels on the opposing ends.

3. System for localizing mobile devices, comprising:

   at least one radiating cable (101,103) for transmitting and receiving radiation from radio communication,
   **characterized by** said radiating cable (101,103) comprising at least one attenuator (102) arranged between first and second opposing ends of the radiating cable (101,103) wherein the attenuating element (102) attenuates a signal on the radiating cable (101,103) by a predetermined amount,

means for controlling the power level received from a mobile device on one of said opposing ends of the radiating cable (101,103) such that a predetermined power level Po is received from each mobile device; and

means for determining the number of mobile devices on the basis of the total power level received from each mobile device on said one opposing end.

4. System for localizing mobile devices according to claim 3, comprising:

a first detection unit (100) connected to the first end of the radiating cable (101,103), said first detection unit being adapted to determine a power level on the first end of radiating cable (101,103),

a second detection (104) unit connected to the second end of the radiating cable (101,103), said second detection unit (104) being adapted to determine a power level on the second end of the radiating cable (101,103).

5. Location determining device for determining a location of mobile devices, said device comprising:

means for receiving power levels detected by a first (100) and a second detection unit (104) of at least one radiating cable (101,103),

processing means for comparing the detected power levels and for determining whether mobile devices are present on the basis of the detected power levels,

**characterized by**

controlling the power level received from a mobile device on one of said opposing ends of the radiating cable (101,103) such that a predetermined power level Po is received from each mobile device; and

determining the number of mobile devices on the basis of the total power level received from each mobile device on said one opposing end.

6. Location determining device according to claim 5, wherein said device for determining is portable or stationary and the means for receiving the detected power levels uses a wired or wireless connecting means to the system for localizing mobile devices.

**Patentansprüche**

1. Verfahren zur Ortsbestimmung von mobilen Geräten, die folgenden Schritte umfassend:

Messen von Leistungspegeln an den sich gegenüberliegenden Enden mindestens eines strahlenden Kabels (101, 103), wobei das besagte strahlende Kabel (101,103) zur Verwendung für das Kommunizieren mit dem mobilen Gerät ausgelegt ist,

Vergleichen der Leistungspegel an den sich gegenüberliegenden Enden des Strahlkabels (101, 103),

Bestimmen, auf der Basis der gemessenen Leistungspegel, ob die mobilen Geräte präsent sind,

**dadurch gekennzeichnet, dass** das besagte strahlende Kabel (101, 103) mindestens ein zwischen den besagten sich gegenüberliegenden Enden angeordnetes Dämpfungselement (102) aufweist,

die Steuerung des von einem mobilen Gerät auf einem der besagten sich gegenüberliegenden Enden des strahlenden Kabels (101, 103) empfangenen Leistungspegels derart erfolgt, dass ein vorbestimmter Leistungspegel Po von jedem mobilen Gerät empfangen wird; und

die Anzahl von mobilen Geräten auf der Basis des von jedem mobilen Gerät auf dem besagten einen der sich gegenüberliegenden Enden empfangenen Gesamtleistungspegel bestimmt wird.

2. Verfahren zur Ortsbestimmung von mobilen Geräten nach Anspruch 1, umfassend den Schritt des Bestimmens, auf der Basis der Differenz zwischen den Leistungspegeln an den sich gegenüberliegenden Enden, wo sich die mobilen Geräte im Verhältnis zu dem Dämpfungselement (102) auf dem strahlenden Kabel (101, 103) befinden.

3. System zur Ortsbestimmung von mobilen Geräten, umfassend:

Mindestens ein strahlendes Kabel (101,103) zum Übertragen und Empfangen von Strahlungen von einer Funkverbindung,

**dadurch gekennzeichnet, dass** das besagte strahlende Kabel (101,103) mindestens ein zwischen dem ersten und dem zweiten der sich gegenüberliegenden Enden des strahlenden Kabels (101, 103) angeordnetes Dämpfungselement (102) umfasst, wobei das Dämpfungselement (102) ein Signal auf dem strahlenden Kabel (101, 103) um einen vorbestimmten Wert abschwächt,

Mittel zum Steuern des von einem mobilen Gerät auf einem der sich gegenüberliegenden Enden des strahlenden Kabels (101, 103) empfangenen Leistungspegels, so dass von jedem mobilen Gerät ein vorbestimmter Leistungspegel Po empfangen wird; und

Mittel zum Bestimmen, auf der Basis des von jedem mobilen Gerät auf dem besagten einen der sich gegenüberliegenden Enden empfangenen Gesamtleistungspegels, der Anzahl von mobilen Geräten.

**4.** System zur Ortsbestimmung von mobilen Geräten nach Anspruch 3, umfassend:

Eine erste Detektionseinheit (100), welche an das erste Ende des strahlenden Kabels (101, 103) angeschlossen ist, wobei die besagte erste Detektionseinheit dazu ausgelegt ist, einen Leistungspegel auf dem ersten Ende des strahlenden Kabels (101,103) zu bestimmen,

eine zweite Detektionseinheit (104), welche an das zweite Ende des strahlenden Kabels (101,103) angeschlossen ist, wobei die besagte zweite Detektionseinheit (104) dazu ausgelegt ist, einen Leistungspegel auf dem zweiten Ende des strahlenden Kabels (101,103) zu bestimmen.

**5.** Ortsbestimmungsvorrichtung zum Bestimmen einer Position von mobilen Geräten, wobei die Vorrichtung umfasst:

Mittel zum Empfangen von von einer ersten (100) und einer zweiten (104) Detektionseinheit mindestens eines strahlenden Kabels (101,103) erkannten Leistungspegeln,

Verarbeitungsmittel zum Vergleichen der erkannten Leistungspegel und zum Bestimmen, auf der Basis der erkannten Leistungspegel, ob mobile Geräte präsent sind,

**gekennzeichnet durch**

Steuern des von einem mobilen Gerät auf einem der besagten sich gegenüberliegenden Enden des Strahlkabels (101, 103) empfangenen Leistungspegels, so dass ein vorbestimmter Leistungspegel Po von jedem mobilen Gerät empfangen wird; und

Bestimmen, auf der Basis des von jedem mobilen Gerät auf dem besagten einen der sich gegenüberliegenden Enden empfangenen Gesamtleistungspegels, der Anzahl der mobilen Geräte.

**6.** Ortsbestimmungsvorrichtung nach Anspruch 5, wobei die besagte Bestimmungsvorrichtung ortsungeboten oder ortsgebunden ist und das Mittel zum Empfangen der erkannten Leistungspegel ein verdrahtetes oder drahtloses Mittel des Systems für die Ortsbestimmung von mobilen Geräten verwendet.

**Revendications**

**1.** Procédé pour localiser des dispositifs mobiles, comprenant les étapes de :

mesure des niveaux de puissance sur les extrémités opposées d'au moins un câble rayonnant (101,103), dans lequel ledit câble rayonnant (101,103) est adapté pour être utilisé pour communiquer avec le dispositif mobile,

comparaison des niveaux de puissance sur les extrémités opposées du câble rayonnant (101,103), en déterminant si les dispositifs mobiles sont présents sur la base des niveaux de puissance mesurés,

**caractérisé en ce que** ledit câble rayonnant (101,103) possédant au moins un atténuateur (102) situé entre lesdites extrémités opposées,

contrôle du niveau de puissance reçu d'un dispositif mobile sur l'une desdites extrémités opposées du câble rayonnant (101,103) de sorte qu'un niveau de puissance prédéterminé Po soit reçu de la part de chaque dispositif mobile ; et

détermination du nombre de dispositifs mobiles sur la base du niveau de puissance total reçu de la part de chaque dispositif mobile sur ladite extrémité opposée.

**2.** Procédé pour localiser des dispositifs mobiles selon la revendication 1, comprenant l'étape de détermination du lieu où se trouvent les dispositifs mobiles par rapport à l'atténuateur (102) sur le câble rayonnant (101,103), sur la base de la différence entre les niveaux de puissance sur les extrémités opposées.

**3.** Système pour localiser des dispositifs mobiles, comprenant :

au moins un câble rayonnant (101,103) pour transmettre et recevoir des rayonnements de la part d'une communication radio,

**caractérisé en ce que** ledit câble rayonnant (101,103) comprend au moins un atténuateur (102) disposé entre les première et deuxième extrémités opposées du câble rayonnant (101,103), dans lequel l'élément d'atténuation (102) atténue un signal sur le câble rayonnant (101,103) d'une valeur prédéterminée,

moyens pour contrôler le niveau de puissance reçu d'un dispositif mobile sur l'une desdites extrémités opposées du câble rayonnant (101,103) de sorte qu'un niveau de puissance prédéterminé Po soit reçu de la part de chaque dispositif mobile ; et

moyens pour déterminer le nombre de dispositifs mobiles sur la base du niveau de puissance total reçu de la part de chaque dispositif mobile sur ladite extrémité opposée.

4. Système pour localiser des dispositifs mobiles selon la revendication 3, comprenant :

une première unité de détection (100) connectée à la première extrémité du câble rayonnant (101,103), ladite première unité de détection étant adaptée pour déterminer un niveau de puissance sur la première extrémité du câble rayonnant (101,103),

une deuxième unité de détection (104) connectée à la deuxième extrémité du câble rayonnant (101,103), ladite deuxième unité de détection (104) étant adaptée pour déterminer un niveau de puissance sur la deuxième extrémité du câble rayonnant (101,103).

5. Dispositif de détermination de position pour déterminer une position de dispositifs mobiles, ledit dispositif comprenant :

moyens pour recevoir des niveaux de puissance détectés par une première (100) et une deuxième unité de détection (104) d'au moins un câble rayonnant (101,103),

moyens de traitement pour comparer les niveaux de puissance détectés et pour déterminer si des dispositifs mobiles sont présents sur la base des niveaux de puissance détectés, **caractérisé par**

contrôle du niveau de puissance reçu d'un dispositif mobile sur l'une desdites extrémités opposées du câble rayonnant (101,103) de sorte qu'un niveau de puissance prédéterminé Po soit reçu de la part de chaque dispositif mobile ; et

détermination du nombre de dispositifs mobiles sur la base du niveau de puissance total reçu de la part de chaque dispositif mobile sur ladite extrémité opposée.

6. Dispositif de détermination de position selon la revendication 5, dans lequel ledit dispositif de détermination est portable ou fixe et les moyens pour recevoir les niveaux de puissance détectés utilisent des moyens de connexion filaires ou sans fil du système de localisation des dispositifs mobiles.

**(100)** **(101)** **(102)** **(103)** **(104)** **(105)**

**(106)** **(108)**

**(107)** **(109)**

# Figure 1

Power levels

**(203)** **(204)**

Pa

-X

Pa - X = Po

(200) (201) (202)

# Figure 2

Figure 3

Figure 4

Figure 5

| Section | PCU 1 | PCU 2 | PCU 3 | PCU 4 |
|---------|-------|-------|-------|-------|
| A | P>Po | P=Po | -- | -- |
| B | P<Po | P=Po | -- | -- |
| C | -- | -- | P>Po | P=Po |
| D | -- | -- | P<Po | P=Po |

Figure 6

**EP 2 214 324 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008042864 A1
- WO 2009018815 A